# EUROPÄISCHE PATENTSCHRIFT

(11) **EP 0 686 802 B1**
(45) Veröffentlichungstag und Bekanntmachung des Hinweises auf die Patenterteilung: **25.07.2001**
(21) Anmeldenummer: 95108614.9
(22) Anmeldetag: 06.06.1995
(51) Int. Cl.: F16P 3/12, H02H 7/085

(54) **Schliessvorrichtung mit einer Sicherheitsschaltung**
Closing device with a safety circuit
Dispositif de fermeture avec un circuit de sécurité

(30) Priorität: 10.06.1994 DE 4420362
(43) Veröffentlichungstag der Anmeldung: 13.12.1995
(73) Patentinhaber: ABB PATENT GmbH, 68309 Mannheim (DE)
(72) Erfinder: Beuter, Richard, 58840 Plettenberg (DE)
(74) Vertreter: Rupprecht, Klaus, Dipl.-Ing.

(56) Entgegenhaltungen:
- GB-A- 2 271 863
- US-A- 5 134 350
- PATENT ABSTRACTS OF JAPAN vol. 017, no. 593 (E-1454), 28. Oktober 1993 & JP 05 176570 A (MATSUSHITA ELECTRIC WORKS LTD), 13. Juli 1993

## Beschreibung

Die Erfindung betrifft eine Schließvorrichtung nach dem Oberbegriff des Anspruches 1. Eine derartige Schließvorrichtung ist aus der GB 2 271 863 A bekannt. Dabei wird die Bewegungsgeschwindigkeit eines Fensters erfaßt. Sobald die Bewegungsgeschwindigkeit unter einen vorbestimmten Grenzwert sinkt, wird dies als Einklemmen eines Hindernisobjektes interpretiert, worauf ein Sicherheits-Regelungsbetrieb durchgeführt wird, der die Fensterscheibe in Öffnungsrichtung bewegt.

Eine Automatisierung von Schließvorrichtungen fördert einerseits die Bequemlichkeit, birgt andererseits aber die Gefahr von Verletzungen. Dies gilt insbesondere für Schließvorrichtungen bei Kraftfahrzeugen, da sich der Fahrzeugführer beim Fahren primär auf den Verkehr konzentriert und durch leichtfertiges oder ungewolltes Betätigen der Schließvorrichtung für sich und seine Mitfahrer eine nicht unerhebliche Gefährdung auslösen kann. So ist es leicht möglich, daß beim Schließen eines Fensters oder Schiebedachs Körperteile eingeklemmt und ggf. auch verletzt werden.

Bekannt sind Schließvorrichtungen, die den Motor direkt oder über Schaltverstärker, wie Relais und Leistungshalbleiter schalten. Um Verletzungen zu vermeiden, hat man bereits in den Rahmenteilen einer Öffnung, die durch ein Verschlußteil, also z. B. eine Scheibe oder ein Schiebedach geschlossen wird, Drucksensoren angebracht. Diese sorgen bei partiellem, auf nur einige Drucksensoren ausgeübtem Druck für ein Umschalten des Motorstroms in Öffnungsrichtung, so daß die Einklemmsituation selbsttätig wieder behoben wird.

Nachteilig an dieser Ausführung ist, daß die voreilenden, bzw. die Sensoren überragenden Lippendichtungen an den Rahmenteilen ein sicheres Reversieren des Motorstroms verhindern, da die Drucksensoren zu tief in den Rahmenteilen liegen und dadurch häufig zu spät ansprechen.

Aufgabe der Erfindung ist es, eine Schließvorrichtung nach dem Oberbegriff des Anspruchs 1 so zu verbessern, daß Verletzungen bei unbeabsichtigter oder leichtsinniger Betätigung der Schließfunktion sicher vermieden werden.

Diese Aufgabe wird durch die in Anspruch 1 gekennzeichneten Merkmale gelöst. Zweckmäßige Ausgestaltungen und Weiterbildungen des Erfindungsgegenstandes sind in den Unteransprüchen genannt.

Erfindungsgemäß ist im Bereich der Öffnung zwischen dem Verschlußteil und einem die Öffnung begrenzenden Rahmen eine aus mehreren, in geeigneten Abständen zueinander angeordneten Sensoren bestehende Sensorreihe so angeordnet, daß diese bei geöffneter Öffnung außerhalb des Wirkbereiches der Dichtlippen einer das Verschlußteil bei geschlossener Öffnung erfassenden Dichtung liegt. Die Dichtlippen überragen somit die Sensoren nicht oder nur unwesentlich und behindern dadurch nicht das Ansprechen der Sensoren im Fall des Einklemmens eines Körperteils. Die aktivierten Sensoren wirken auf eine Logikschaltung ein, die aufgrund der aktivierten und nicht aktivierten Sensoren eine Plausibilitätsprüfung vornimmt, mit der Gefahr signalisierende Aktivierungen erfaßt und so ausgewertet werden, daß im Gefahrenfall die Reversierschaltung die Stromflußrichtung des Motorstromes umschaltet.

Besonders vorteilhaft an der erfindungsgemäßen Schließvorrichtung ist, daß sie mit einfachen Mitteln aufgebaut ist und die Plausibilitätsprüfung so gestaltet werden kann, daß Gefahrenzustände sicher erfaßt werden.

Ein besonders kostengünstiger Aufbau der Schließvorrichtung läßt sich erzielen, wenn die Sensorreihe auf der in Verschlußrichtung liegenden Schließkante des Verschlußteils befestigt ist. Hierbei können die Sensoren in einem vorgefertigten Streifen, der z. B. als Schaltmatte mit einer Vielzahl einzelner Kontaktgeber und mit deren Zuführungsleitungen ausgebildet ist. Eine derartige Schaltmatte kann auf die Schließkante aufgeklebt und über eine flexible Leitung mit der Logikschaltung verbunden werden.

Eine alternative zweckmäßige Ausgestaltung der Erfindung sieht vor, die Sensorreihe auf der in Verschlußrichtung liegenden Schließkante des Rahmens zu befestigen. Auch hierbei können die Sensoren in einem vorgefertigten Streifen liegen und auf die Schließkante aufgeklebt und über eine Leitung mit der Logikschaltung verbunden werden.

Damit jedoch die Dichtlippen der Dichtung eine Aktivierung der Sensoren im Gefahrenfall nicht behindern, ist es vorteilhaft in weiterer Ausbildung des Erfindungsgegenstandes dafür zu sorgen, daß die Sensoren von der Schließkante des Verschlußteils aktiviert werden können, bevor die Dichtlippen wirksam werden. Hierzu sind die Sensoren der Sensorreihe so angeordnet und/oder ausgebildet, daß sie beim Zusammentreffen mit der Schließkante des Verschlußteils zunächst eine Signalgabe auslösen und dann in den Dichtungsspalt zwischen die Dichtlippen der Dichtung entgegen einer Federkraft hineingedrückt werden. Beim Öffnen des Verschlußteils sorgen die Federkräfte dafür, daß die Sensoren wieder in ihre gegenüber den Dichtlippen voreilende Stellung zurückbewegt werden.

Zur Realisierung der Logikschaltung besteht eine Vielzahl von Möglichkeiten, wobei gegebenenfalls auch ein Prozessor zum Einsatz gelangen kann. Eine dieser Möglichkeiten besteht darin, die Plausibilitätsprüfung aufgrund der aktivierten und nicht aktivierten Sensoren so durchzuführen, daß die Logikschaltung einen Befehl zum Reversieren des Motors gibt, wenn beim Schließen des Verschlußteils mehr als eine untere Grenzzahl aber weniger als eine obere Grenzzahl aller Sensoren aktiviert sind. Die untere Grenzzahl könnte im Extremfall Null sein, so daß in diesem Fall mindestens ein Sensor aktiviert werden müßte, nicht aber alle Sensoren aktiviert sein dürfen, da das normalerweise nur bei geschlossenem Verschlußteil der Fall sein kann.

Eine Kontrolle, ob nicht bereits die Schließstellung des Verschlußteils erreicht ist, kann alternativ auch dadurch erfolgen, daß die Aktivierung bestimmter Sensoren ermittelt wird. Sind z.B. zwei Sensoren aktiviert, von denen sich der eine in einer linken und der andere in einer rechten Extremlage befindet, so können diese gemeinsam nur durch das Verschlußteil in seiner Schließstellung aktiviert worden sein.

Die Reversierschaltung ist in vorteilhafter Weise so aufgebaut, daß das von der UND-Logik kommende Signal ggf. über ein Zeitglied verzögert einer Steuereinheit zugeführt wird, die ihrerseits die Stromflußrichtung des Motorstroms umschaltet.

Weiterhin ist es zweckmäßig die Schließvorrichtung so aufzubauen, daß in Reihe zu dem über die Steuereinheit mit Strom versorgten Motor ein Meßwiderstand des Meßwertgrenzsignalgebers liegt.

Ein Taster besitzt eine Umschalttastfunktion und führt in Abhängigkeit von der Tastrichtung Minus- oder Pluspotential dem Eingang der Steuereinheit zu, wobei diese ihrerseits die Stellrichtung des Motors entsprechend verändert.

Ein zum Meßwert-Grenzsignalgeber gehöriger Komparator vergleicht den Spannungsabfall des Motorstroms am Meßwiderstand mit einer Referenzspannung und führt sein hiervon abhängiges Ausgangssignal der UND-Logik zu. Zwei in Reihe zwischen Plus- und Minuspotential liegende Widerstände erzeugen die zwischen ihnen abzugreifende Referenzspannung.

Der erläuterte Aufbau der Schließvorrichtung mit logischen Bauelementen kann nur eine der vielfältigen Lösungsmöglichkeiten im Sinne des Erfindungsgedankens verdeutlichen. Eine gleichartige Wirkungsweise kann auch unter Zugrundelegung anderer Potentialverhältnisse und mit anderen logischen Schaltelementen erzeugt werden.

Ausführungsbeispiele der Erfindung sind in den Zeichnungen dargestellt und werden im folgenden näher erläutert.

Es zeigen:
- Fig. 1: den prinzipiellen Aufbau einer Schaltung mit logischen Schaltelementen für eine Schließvorrichtung unter Verwendung einer Sensorreihe,
- Fig. 2: einen Ausschnitt aus Fig. 3 entlang der Schnittlinie A-A zur Verdeutlichung eines Schaltkontaktes als Sensor,
- Fig. 3: die Tür von einem PKW mit einem Fenster als Verschlußteil,
- Fig. 4: die Tür eines Pkws mit einer Sensorreihe auf der Schließkante eines Fensters.

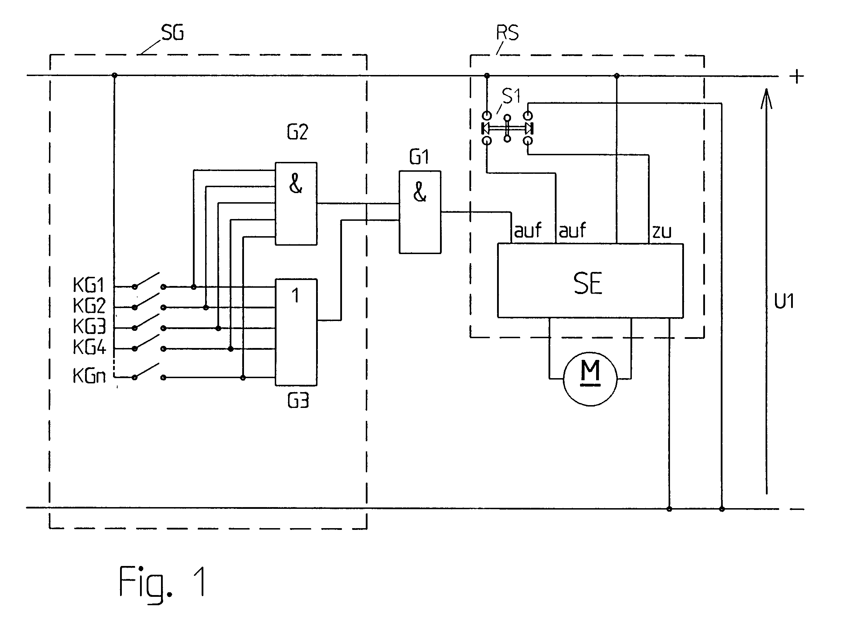

Wie Fig. 1 erkennen läßt besitzt die Schließvorrichtung eine Reversierschaltung RS, die es ermöglicht die Stellrichtung eines Motors M unter bestimmten Bedingungen umzukehren. Diese Bedingungen erlangen unter sicherheitstechnischen Aspekten nur in der Schließphase eine Bedeutung, da nur während dieser Zeit die Gefahr eines Einklemmens besteht, so daß während der Öffnungsphase keine Umkehrung der Stellrichtung des Motors M erforderlich ist. Der Motorstrom wird bei diesem Beispiel unmittelbar vom Steuerstromkreis aufgebracht, um die Darstellung und damit das Verständnis zu erleichtern. Selbstverständlich könnte der Motor M auch im Schaltkreis eines Relais oder Verstärkers liegen. Die Erzeugung des Motorstroms erfolgt mit Hilfe einer Spannungsquelle U1 über eine Steuereinrichtung SE, in der sich auch Betätigungsorgane befinden.

Sollte beim Schließen des Fensters versehentlich ein Körperteil eingeklemmt werden, so wird mindestens einer von mehreren an Pluspotential liegenden, als Sensoren wirkenden Kontaktgebern KG1-KGn eines Stellungsgebers SG in seine Einschaltstellung gedrückt und aktiviert dadurch den zugehörigen Eingang einer nachgeschalteten ODER-Logik G3, die hierdurch ebenfalls aktiviert wird und den Eingang einer nachgeschalteten UND-Logik G1 mit High beaufschlagt. An ihrem zweiten Eingang erhält die UND-Logik G1 nur dann ebenfalls ein High, wenn mindestens ein Kontaktgeber KG1-KGn nicht eingeschaltet wurde. Hierzu ist der zweite Eingang der UND-Logik G1 mit dem Ausgang einer NAND-Logik G2 verbunden, deren Eingänge mit den Eingängen der ODER-Logik (G3) verbunden sind.

Mit Hilfe der NAND-Logik G2 wird sichergestellt, daß in der Schließstellung zwangsläufig ausgelöste Sensoraktivierungen nicht als Gefahr interpretiert werden. Dies kann alternativ auch dadurch erfolgen, daß nur ganz bestimmte, sich in exponierter Lage befindende Sensoren von der NAND-Logik G2 erfaßt werden, die im Gefahrenfall nie aktiviert werden. Am prinzipiellen Schaltungsaufbau ändert sich hierdurch nichts, so daß sich eine Darstellung dieser Schaltungsvariante erübrigt.

Die im Gefahrenfall aktivierte UND-Logik G1 gibt ein High-Signal ab, das einen zur Reversierschaltung RS gehörigen ersten "Auf-Eingang" einer Steuereinheit SE erreicht und ein Umschalten des Motorstroms bewirkt. Dementsprechend öffnet der Motor M das angetriebene Verschlußteil, also beispielsweise das Fenster wieder, und ermöglicht dadurch eine Freigabe ggf. eingeklemmter Körperteile.

Durch Bewegen eines Tasters S1 in seine rechte Einschaltstellung wird einem "Zu-Eingang" der Steuereinheit negatives Potential zugeführt, das ein Zurücksetzen in die Grundstellung bewirkt und damit ein erneutes Schließen des Fensters ermöglicht.

Die Steuereinheit SE muß so aufgebaut sein, daß einem Plussignal an seinem ersten "Auf-Eingang" Vorrang gegenüber einem Minussignal an seinem "Zu-Eingang" eingeräumt wird. Dies ist wichtig, damit bei einer Einklemmgefahr sich das Fenster automatisch wieder öffnet. Unabhängig von der automatischen Sicherheitsöffnung kann durch eine Bewegung des Tasters S1 von seiner Ruhelage in seine linke Einschaltstellung einem zweiten "Auf-Eingang" der Steuereinheit positives Potential zugeführt werden, so daß auch ein gezieltes Öffnen des Fensters von Hand möglich ist.

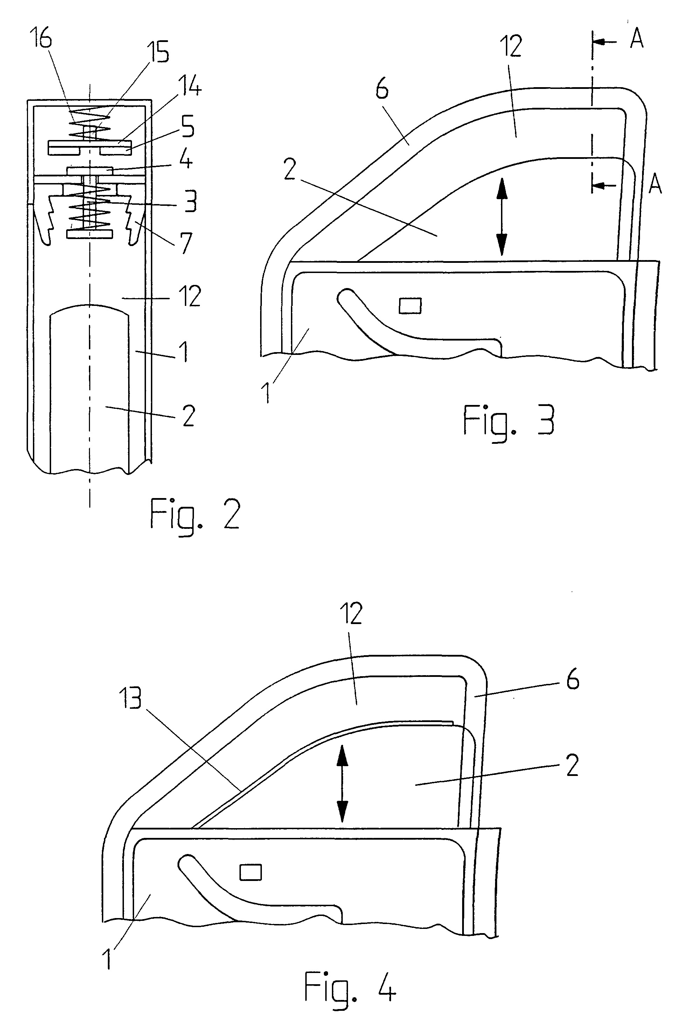

Die Fig. 2 bis 4 zeigen verschiedene mechanische Teile der Schließvorrichtung. Bei Fig. 2 erkennt man in einer Autotür 1 eine als Verschlußteil 2 wirkende Fensterscheibe, die beim Schließen einer Öffnung 12 in ihrer Schließstellung auf einen als Sensor wirkenden Kontaktgeber trifft. Es handelt sich hierbei um einen von mehreren auf einer Schließkante eines Rahmens 6 befestigten Kontaktgebern KG1-KGn. Jeder von ihnen besitzt eine Kontaktfeder 3, ein als Kontaktbrücke wirkendes bewegliches Kontaktteil 4 und zwei durch die Kontaktbrücke zu verbindende Einzelkontakte 5. Als Besonderheit ist außerdem jeder Kontaktgeber so angeordnet und aufgebaut, daß er nach einer Kontaktgabe von der Fensterscheibe 2 noch weiter in den Rahmen 6 hineingedrückt wird. Hierzu sind die Einzelkontakte 5 auf einer Isolierplatte 14 befestigt, die ihrerseits einen Führungszapfen 15 besitzt und durch Zusammenpressen einer Druckfeder 16 eine Bewegung ermöglicht. Durch diese zusätzliche Bewegung ist es dem zwischen den Dichtungslippen einer Dichtung 7 liegenden Kontaktgeber möglich, unbehindert durch die Dichtlippen, Kontakt zu geben aber auch andererseits die Dichtlippen in ihrer Wirkung nicht zu behindern.

Alternativ zu Fig. 2 ist in Fig. 4 angedeutet, daß es einfacher sein kann eine Sensorreihe 13 auf der Schließkante der Fensterscheibe 2 zu befestigen, da in diesem Fall eine gegenseitige Behinderung zwischen Sensoren und Dichtlippen von vornherein ausscheidet.

## Patentansprüche

1. Schließvorrichtung zum automatischen Schließen von Öffnungen (12) durch ein motorgetriebenes Verschlußteil (2) mit einer Sicherheitsschaltung, die zum Schutz von Körperteilen beim Signalisieren einer Einklemmgefahr so auf den Motor (M) einwirkt, daß dieser durch Umkehren seiner Laufrichtung ein Einklemmen verhindert, dadurch gekennzeichnet, daß im Bereich der Öffnung zwischen dem Verschlußteil (2) und einem die Öffnung begrenzenden Rahmen (6) eine aus mehreren, in geeigneten Abständen zueinander angeordneten Sensoren (KG1-KGn), vorzugsweise einfachen Kontaktgebern, bestehende Sensorreihe (13) so angeordnet ist, daß diese bei geöffneter Öffnung (12) außerhalb des Wirkbereiches von Dichtlippen einer das Verschlußteil (2) bei geschlossener Öffnung (12) erfassenden Dichtung (7) liegt und daß die Sensoren (KG1-KGn) auf eine Logikschaltung wirken, die aufgrund der aktivierten und nicht aktivierten Sensoren (KG1-KGn) eine Plausibilitätsprüfung vornimmt, mit der Gefahr signalisierende Aktivierungen erfaßt und so ausgewertet werden, daß im Gefahrenfall die Reversierschaltung (RS) die Stromflußrichtung des Motorstromes umschaltet.

2. Schließvorrichtung nach Anspruch 1, dadurch gekennzeichnet, daß die Sensorreihe (13) auf der in Verschlußrichtung liegenden Schließkante des Verschlußteils (2) befestigt ist.

3. Schließvorrichtung nach Anspruch 1 oder 2, dadurch gekennzeichnet, daß die Sensorreihe (13) auf der in Verschlußrichtung liegenden Schließkante des Rahmens (6) befestigt ist.

4. Schließvorrichtung nach Anspruch 3, dadurch gekennzeichnet, daß die Sensoren (KG1-KGn) der Sensorreihe (13), die vorzugsweise aus einfachen Schalterelementen bestehen, so angeordnet und/oder ausgebildet sind, daß sie beim Zusammentreffen mit der Schließkante des Verschlußteils (2) zunächst eine Signalgabe auslösen und dann in den Dichtungsspalt zwischen den Dichtlippen der Dichtung (7) entgegen einer Federkraft hineingedrückt werden.

5. Schließvorrichtung nach einem der Ansprüche 1 bis 4, dadurch gekennzeichnet, daß die Plausibilitätsprüfung aufgrund der aktivierten und nicht aktivierten Sensoren (KG1-KGn) so erfolgt, daß die Logikschaltung einen Befehl zum Reversieren des Motors gibt, wenn beim Schließen des Verschlußteils (2) mehr als eine untere Grenzzahl, die auch Null sein kann, aber weniger als eine obere Grenzzahl aller Sensoren (KG1-KGn) aktiviert sind.

6. Schließvorrichtung nach einem der Ansprüche 1 bis 4, dadurch gekennzeichnet, daß die Plausibilitätsprüfung aufgrund der aktivierten und nicht aktivierten Sensoren (KG1-KGn) so erfolgt, daß die Logikschaltung einen Befehl zum Reversieren des Motors gibt, wenn beim Schließen des Verschlußteils (2) mindestens ein Sensor (KG1-KGn) aktiviert ist, aber bestimmte, in der Regel nur in Schließstellung des Verschlußteils (2) aktivierbare Sensoren (KG1-KGn), nicht aktiviert sind.

7. Schließvorrichtung nach Anspruch 5, dadurch gekennzeichnet, daß mehrere Sensoren (KG1-KGn) einerseits mit den Eingängen einer ODER-Logik (G3) und andererseits mit den Eingängen einer NAND-Logik (G2) verbunden sind, und die Ausgänge dieser beiden Logikelemente (G2, G3) mit dem Eingang einer UND-Logik (G1) verbunden sind, die ihrerseits ein High-Signal abgibt, wenn mindestens ein Sensor (KG1-KGn) aktiviert ist, aber nicht alle Sensoren (KG1-KGn) aktiviert sind.

8. Schließvorrichtung nach Anspruch 6, dadurch gekennzeichnet, daß mehrere Sensoren (KG1-KGn) mit den Eingängen einer ODER-Logik (G3) und nur einige bestimmte, nur in der Schließstellung des Verschlußteils (2) aktivierbare Sensoren mit den Eingängen einer NAND-Logik (G2) verbunden sind, und die Ausgänge dieser beiden Logikelemente (G2, G3) mit dem Eingang einer UND-Logik (G1) verbunden sind, die ihrerseits ein High-Signal abgibt, wenn mindestens ein Sensor (KG1-KGn) aktiviert ist, aber die bestimmten, nur in der Schließstellung des Verschlußteils (2) aktivierbaren Sensoren nicht aktiviert sind.

9. Schließvorrichtung nach Anspruch 7 und 8, dadurch gekennzeichnet, daß ein aktivierter Ausgang der UND-Logik ein Reversieren des Motors (M) auslöst.

10. Schließvorrichtung nach Anspruch 9, dadurch gekennzeichnet, daß zum Reversieren des Motors (M) eine Reversierschaltung (RS) dient, zu der eine Steuereinheit (SE) gehört, die ausgehend von einer Spannungsquelle (U1) den Motor (M) mit Strom versorgt und die in Abhängigkeit von den ihr zugeführten Eingangssignalen die Stromrichtung des Motorstroms vorgibt, und daß die Steuereinheit (SE) bei gleichzeitiger Zuleitung sowohl eines Plus- als auch eines Minussignals dem Signal Vorrang einräumt, das zu einem Öffnen des Verschlußteils (2) führt.

11. Schließvorrichtung nach einem der Ansprüche 1 bis 10, dadurch gekennzeichnet, daß im Motorstromkreis ein Meßwiderstand des MeßwertGrenzsignalgebers liegt.

12. Schließvorrichtung nach Anspruch 11, dadurch gekennzeichnet, daß ein Taster (S1) eine Umschalttastfunktion besitzt und in Abhängigkeit von der Tastrichtung Minus- oder Pluspotential dem Eingang der Steuereinheit (SE) zuführt, wodurch diese die Stellung des Motors entsprechend verändert.

## Claims

1. A closing apparatus for the automatic closing of openings (12) by a motor-driven closing part (2) with a safety circuit which for the protection of body parts during the signalization of a squeezing hazard acts on the motor (M) in such a way that the same prevents any squeezing by reversing its running direction, characterized in that in the zone of the opening between the closing part (2) and a frame (6) limiting the opening, a row of sensors (13) which consists of several sensors (KG1-KGn), preferably simple contact makers, which are arranged at suitable distances from one another is arranged in such a way that when the opening is opened (12) the same is disposed outside of the effective range of sealing lips of a seal (7) grasping the closing part (2) when the opening (12) is closed and that the sensors (KG1-KGn) act upon a logic circuit which performs a plausibility check as a result of the activated and not activated sensors (KG1-KGn) with which activations are detected which signalize a hazard and are evaluated in such a way that in the event of a hazard the reversing circuit (RS) changes the direction of current flow of the motor current.

2. A closing apparatus as claimed in claim 1, characterized in that the row of sensors (13) is fastened to the closing edge of the closing part (2) which is disposed in the closing direction.

3. A closing apparatus as claimed in claim 1 or 2, characterized in that the row of sensors (13) is fastened to the closing edge of the frame (6) which is disposed in the closing direction.

4. A closing apparatus as claimed in claim 3, characterized in that the sensors (KG1-KGn) of the row of sensors (13) which preferably consist of simple switching elements are disposed and/or arranged in such a way that on meeting with the closing edge of the closing part (2) they initiate a signaling and are then pressed into the sealing gap between the sealing lips of the seal (7) against a spring force.

5. A closing apparatus as claimed in one of the claims 1 to 4, characterized in that the plausibility check is performed as a result of the activated or not activated sensors (KG1-KGn) in such a way that the logic circuit issues a command for reversing the motor when during the closing of the closing part (2) more than one lower limit, which can also be zero, but less than one upper limit of all sensors (KG1-KGn) are activated.

6. A closing apparatus as claimed in one of the claims 1 to 4, characterized in that the plausibility check is performed as a result of the activated or not activated sensors (KG1-KGn) in such a way that the logic circuit issues a command for reversing the motor when during the closing of the closing part (2) at least one sensor (KG1-KGn) is activated, but certain sensors (KG1-KGN), which usually can only be activated in the closed position of the closing part (2), are not activated.

7. A closing apparatus as claimed in claim 5, characterized in that several sensors (KG1-KGn) are connected on the one hand with the inputs of an OR logic circuit (G3) and on the other hand with the inputs of a NAND logic circuit (G2) and the outputs of these two logic elements (G2, G3) are connected with the input of an AND logic circuit which on its part issues a high signal when at least one sensor (KG1-KGn) is activated but not all sensors (KG1-KGn) are activated.

8. A closing apparatus as claimed in claim 6, characterized in that several sensors (KG1-KGn) are connected with the inputs of an OR logic circuit (G3) and only a few specific sensors which can only be activated in the closed position of the closing part (2) are connected with the inputs of a NAND logic circuit (G2), and the outputs of said two logic elements (G2, G3) are connected with the input of an AND logic circuit (G1) which on its part issues a high signal when at least one sensor (KG1-KGn) is activated, but the specific sensors which can be activated only in the closed position of the closing part (2) are not activated.

9. A closing apparatus as claimed in claim 7 and 8, characterized in that an activated output of the AND logic circuit initiates a reversing of the motor (M).

10. A closing apparatus as claimed in claim 9, characterized in that for reversing the motor (M) a reversing circuit (RS) is used which includes a control unit (SE) which based on a voltage source (U1) supplies the motor (M) with current and predetermines the direction of the motor current depending on the input signals supplied to the same, and that in the case of a simultaneous supply of both a plus and a minus signal, the control unit (SE) gives the signal which leads to the opening of the closing part (2) priority.

11. A closing apparatus as claimed in one of the claims 1 to 10, characterized in that a measuring shunt of the measured-value limit transducer is disposed in the motor current circuit.

12. A closing apparatus as claimed in claim 11, characterized in that a momentary-contact (S1) comprises a changeover contact function and, depending on the contact direction, supplies minus or plus potential to the input of the control unit (SE), as a result of which the same changes the position of the motor accordingly.

## Revendications

1. Dispositif de fermeture pour la fermeture automatique d'ouvertures (12) par un élément de fermeture (2) entraîné par un moteur, avec un circuit de sécurité agissant sur le moteur (M) pour protéger des parties du corps si un risque de pincement est signalé, de telle sorte que le moteur empêche le pincement en inversant son sens de marche, caractérisé en ce qu'il est prévu au niveau de l'ouverture, entre l'élément de fermeture (2) et un cadre (6) délimitant l'ouverture, une rangée de capteurs (13) composée de plusieurs capteurs (KG1-KGn) espacés de manière appropriée, de préférence des contacteurs simples, disposée de telle sorte que lorsque l'ouverture (12) est ouverte, elle se trouve hors de portée des lèvres d'étanchéité d'un joint (7) saisissant l'élément de fermeture (2) lorsque l'ouverture (12) est fermée, et en ce que les capteurs (KG1-KGn) agissent sur un circuit logique qui effectue un contrôle de plausibilité en fonction des capteurs (KG1-KGn) activés et non activés, capte les activations signalant un danger et les évalue de telle sorte qu'en cas de danger, le circuit d'inversion (RS) commute le sens du courant du moteur.

2. Dispositif de fermeture selon la revendication 1, caractérisé en ce que la rangée de capteurs (13) est fixée sur le bord de fermeture de l'élément de fermeture (2) orienté dans le sens de la fermeture.

3. Dispositif de fermeture selon la revendication 1 ou 2, caractérisé en ce que la rangée de capteurs (13) est fixée sur le bord de fermeture du cadre (6) orienté dans le sens de la fermeture.

4. Dispositif de fermeture selon la revendication 3, caractérisé en ce que les capteurs (KG1-KGn) de la rangée de capteurs (13), qui se composent de préférence de commutateurs simples, sont disposés et/ou conçus de telle sorte qu'ils déclenchent d'abord l'émission d'un signal lors de la rencontre avec le bord de fermeture de l'élément de fermeture (2) et soient ensuite enfoncés dans l'interstice entre les lèvres du joint (7) contre une force de ressort.

5. Dispositif de fermeture selon l'une quelconque des revendications 1 à 4, caractérisé en ce que le contrôle de plausibilité est exécuté en fonction des capteurs (KG1-KGn) activés et non activés de telle sorte que le circuit logique donne un ordre d'inversion du moteur si plus d'un nombre limite inférieur, qui peut aussi être nul, mais moins d'un nombre limite supérieur de capteurs (KG1-KGn) sont activés au moment de la fermeture de l'élément de fermeture (2).

6. Dispositif de fermeture selon l'une quelconque des revendications 1 à 4, caractérisé en ce que le contrôle de plausibilité est exécuté en fonction des capteurs (KG1-KGn) activés et non activés de telle sorte que le circuit logique donne un ordre d'inversion du moteur si au moins un capteur (KG1-KGn) est activé au moment de la fermeture de l'élément de fermeture (2) mais certains capteurs (KG1-KGn) qui ne peuvent normalement être activés que lorsque l'élément de fermeture (2) est fermé ne sont pas activés.

7. Dispositif de fermeture selon la revendication 5, caractérisé en ce que plusieurs capteurs (KG1-KGn) sont reliés, d'une part, avec les entrées d'une logique OU (G3) et d'autre part avec les entrées d'une logique NON-ET (G2), et les sorties de ces deux éléments logiques (G2, G3) sont reliés à l'entrée d'une logique ET (G1) qui délivre un signal d'activation si au moins un capteur (KG1-KGn) est activé mais que les capteurs (KG1-KGn) ne sont pas tous activés.

8. Dispositif de fermeture selon la revendication 6, caractérisé en ce que plusieurs capteurs (KG1-KGn) sont reliés aux entrées d'une logique OU (G3) et seulement certains capteurs, qui ne peuvent être activés que lorsque l'élément de fermeture (2) est fermé, sont reliés aux entrées d'une logique NON-ET (G2), et les sorties de ces deux éléments logiques (G2, G3) sont reliés à l'entrée d'une logique ET (G1) qui délivre un signal d'activation si au moins un capteur (KG1-KGn) est activé mais que les capteurs (KG1-KGn) ne pouvant être activés que lorsque l'élément de fermeture (2) est fermé ne sont pas activés.

9. Dispositif de fermeture selon les revendications 7 et 8, caractérisé en ce que l'activation d'une sortie de la logique ET entraîne l'inversion du moteur (M).

10. Dispositif de fermeture selon la revendication 9, caractérisé en ce que l'inversion du moteur (M) est réalisée par un circuit d'inversion (RS) dont fait partie une unité de commande (SE) alimentant le moteur (M) en électricité à partir d'une source de tension (U1) et déterminant le sens du courant dans le moteur en fonction des signaux d'entrée qui lui sont transmis, et en ce que lorsque l'unité de commande (SE) reçoit à la fois un signal positif et un signal négatif, elle donne la priorité au signal qui déclenche l'ouverture de l'élément de fermeture (2).

11. Dispositif de fermeture selon l'une quelconque des revendications 1 à 10, caractérisé en ce qu'une résistance de mesure du détecteur de signal de valeur de mesure limite se situe dans le circuit électrique du moteur.

12. Dispositif de fermeture selon la revendication 11, caractérisé en ce qu'un élément manipulateur (S1) possède une fonction de manipulation de commutation et transmet, en fonction du sens de manipulation, un potentiel positif ou négatif à l'entrée de l'unité de commande (SE), qui modifie en conséquence la position du moteur.
